# EUROPÄISCHE PATENTSCHRIFT

(11) **EP 0 585 685 B1**
(45) Veröffentlichungstag und Bekanntmachung des Hinweises auf die Patenterteilung: **24.01.1996**
(21) Anmeldenummer: 93112963.9
(22) Anmeldetag: 12.08.1993
(51) Int. Cl.: B65G 47/71

(54) **Vorrichtung zum Überleiten eines in einer Reihe einspurig zulaufenden Gefässstromes auf mehrere abführende Förderspuren**
Apparatus for transfering a single arriving stream of aligned containers to several discharge tracks
Dispositif pour la transition d'un flux de récipients alignés arrivant en une seule rangée sur plusieurs rangées d'évacuation

(30) Priorität: 02.09.1992 DE 9211817 U
(43) Veröffentlichungstag der Anmeldung: 09.03.1994
(73) Patentinhaber: KRONES AG Hermann Kronseder Maschinenfabrik, D-93068 Neutraubling (DE)
(72) Erfinder: Schneider, Egon, D-93073 Neutraubling (DE)
(74) Vertreter: Grünecker, Kinkeldey, Stockmair & Schwanhäusser Anwaltssozietät

(56) Entgegenhaltungen:
- EP-A- 0 263 047
- DE-A- 2 227 912
- DE-A- 3 638 436
- DE-U- 9 211 817
- FR-A- 1 387 920
- US-A- 2 451 104

## Beschreibung

Die Erfindung betrifft eine Vorrichtung zum Überleiten eines in einer Reihe einspurig zulaufenden Gefäßstromes auf mehrere abführende Förderspuren gemäß dem Oberbegriff des Anspruchs 1.

Derartige Vorrichtungen sind in verschiedenen Ausführungen aus der Patentliteratur (DE-A-2 227 912, US-PS 2 684 800 und US-PS 2 308 154) bekannt. Sie werden in Füll- und Verpackungslinien eingesetzt, wenn eine Aufteilung eines einspurigen Gefäßstromes auf mehrere Förderspuren erforderlich ist, um beispielsweise mehrspurig arbeitende Verpackungsmaschinen mit Gefäßen zu versorgen. In Flaschenfüllinien ist dies im Bereich zwischen der einspurig arbeitenden Etikettiermaschine und der danach folgenden mehrspurig arbeitenden Flascheneinpackmaschine zum Einsetzen der Flaschen in Kästen oder Kartons erforderlich.

Bisher wurden zum Überleiten der einspurig zulaufenden Gefäße Schaltweichen oder -klappen eingesetzt, deren starre Leitfläche in den Förderweg der einspurig zulaufenden Gefäße geschwenkt werden kann. Als nachteilig werden bei diesen Vorrichtungen die unruhige Gefäßführung während des Überleitvorganges und die daraus resultierenden Impulsgeräusche und Gefäßbeanspruchung empfunden.

Demzufolge liegt der Erfindung die Aufgabe zugrunde, eine gattungsgemäße Vorrichtung zum Überleiten eines in einer Reihe einspurig zulaufenden Gefäßstromes auf mehrere abführende Förderspuren dahingehend zu verbessern, daß auch bei hohen Förderleistungen eine ruhige, gefäßschonende und geräuscharme Gefäßführung während des Überleitvorganges gewährleistet ist.

Diese Aufgabe wird durch die im kennzeichnenden Teil des Anspruchs 1 angegebenen Merkmale gelöst.

Durch die biegeelastische Ausbildung der Schaltweiche kann eine kanten- und knickfreie Führung der Gefäße während des gesamten Überleitvorganges bewerkstelligt werden, so daß auch bei sehr hohen Fördergeschwindigkeiten eine ruhige und gleichmäßige Gefäßführung sichergestellt ist. Dazu trägt der tangentiale Übergang der Oberfläche der Zulaufgeländer zur Schaltweiche und von dieser auf das nachfolgende Trenngeländer bei. Ein absolut bündiger Übergang der Oberfläche des Zulaufgeländers auf die Oberfläche der Schaltweiche wird durch Vertiefungen oder Aussparungen im Zulaufgeländer zur Aufnahme des quer zur Förderrichtung bewegbaren Endes der Schaltweiche erreicht.

Eine besonders vorteilhafte Weiterbildung der Erfindung sieht einen nahtlosen Übergang der den einspurigen Gefäßstrom führenden Zulaufgeländer in die Ablaufgeländer vor, wobei die Geländer nahe der Schaltweiche unter Ausbildung eines Erweiterungsbereiches ineinander übergehen. Ein besonders günstiger Konturverlauf der die Zulaufgeländer mit den Ablaufgeländern verbindenden Übergangsgeländer wird dann erzielt, wenn diese im Erweiterungsbereich möglichst über ihre gesamte Länge biegeelastisch ausgebildet sind. Dadurch kann an den Übergangsstellen ein tangentialer, abgerundeter und knickfreier Übergang der Geländer erzielt werden.

Die Schaltweiche selbst ist zumindest abschnittsweise, d.h. an ihrem stromaufwärtigen und stromabwärtigen Ende, biegeelastisch ausgebildet. Noch günstiger ist die Verwendung einer über ihre gesamte Länge biegeelastischen Schaltweiche, da sich dann die Kontur der Schaltweiche in beiden Schaltstellungen kongruent zum Konturverlauf des im Erweiterungsbereich jeweils gegenüberliegenden Geländers ausformen kann. Ein kongruenter Konturverlauf zwischen der Schaltweiche und dem gegenüberliegenden, feststehenden Geländer gewährleistet einen in Förderrichtung gesehen konstanten Abstand zwischen den beiden Konturen zur exakten Führung der Gefäße.

Gemäß einer vorteilhaften Weiterbildung der Erfindung ist die Schaltweiche einstückig mit dem in Förderrichtung anschließenden Trenngeländer ausgebildet wobei der die Schaltweiche bildende Teil über die gesamte Länge biegeelastisch ausgeführt ist. Weitere vorteilhafte Weiterbildungen der Erfindung sind Gegenstand der Unteransprüche.

Nachfolgend werden zwei Ausführungsbeispiele anhand der Figuren erläutert. Es zeigen:
- Fig. 1: ein erstes Ausführungsbeispiel in der Draufsicht,
- Fig. 2: einen senkrechten Schnitt entlang der Linie A-A in Fig. 1 und
- Fig. 3: ein zweites Ausführungsbeispiel in der Draufsicht.

Die Gefäße 15 werden aufrecht auf einem Förderband 16 stehend in Förderrichtung F transportiert. Oberhalb der durch das Förderband 16 gebildeten Förderebene sind an beiden Seiten des Förderbandes Zulaufgeländer 3 angeordnet, die jeweils - in Förderrichtung F gesehen - in einem Erweiterungsbereich 9 in ein S-förmiges Übergangsgeländer 12 einmünden, an das sich ein Ablaufgeländer 4 anschließt. Zwischen den beiden gegenüberliegenden Ablaufgeländern 4 ist ein Trenngeländer 2 angeordnet, das von oben her durch Zapfen 17 gehalten wird.

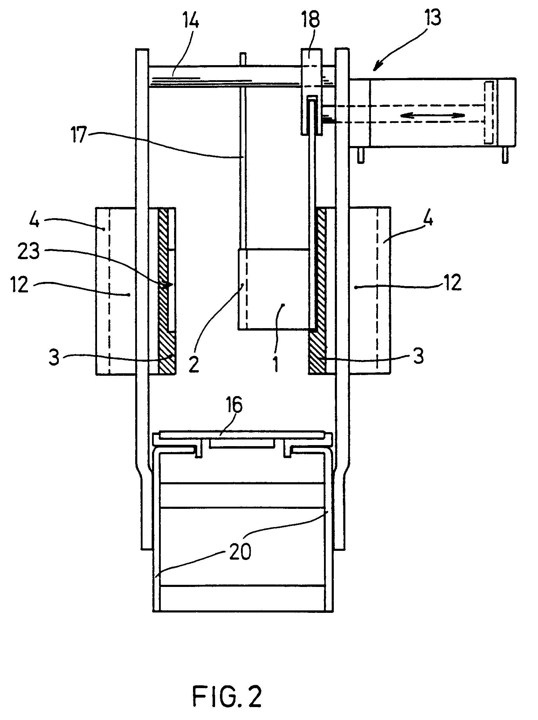

Im Erweiterungsbereich 9 ist zwischen den beiden Übergangsgeländern 12 die Schaltweiche 1 angeordnet. Das stromaufwärtige Ende 7 der Schaltweiche 1 kann mittels einer Betätigungseinrichtung 13 quer zur Förderrichtung F von einem Zulaufgeländer 3 zum gegenüberliegenden Zulaufgeländer wechselweise überführt werden. Der Aufbau der Betätigungseinrichtung 13 ist in Fig. 2 besser erkennbar.

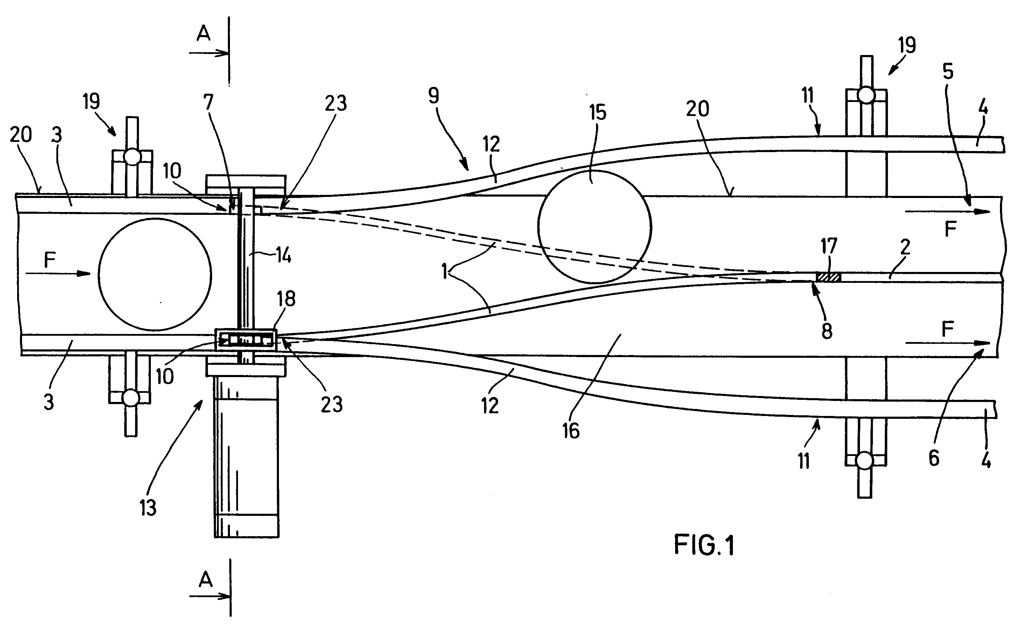

Bei dem in Fig. 1 dargestellten Ausführungsbeispiel ist die über ihre gesamte Länge quer zur Förderrichtung F biegeelastische Schaltweiche 1 einstückig mit dem Trenngeländer 2 ausgebildet. Das stromabwärtige Ende 8 der Schaltweiche 1 wird durch den das Trenngeländer starr tragenden Zapfen 17 definiert. Die Schaltweiche 1 wird an ihrem stromabwärtigen Ende 8 durch den Zapfen 17 nach Art einer einseitig eingespannten Blattfeder gehalten.

Die jeweils ein Zulaufgeländer 3 mit einem Ablaufgeländer 4 verbindenden Übergangsgeländer 12 sind - ähnlich der Schaltweiche 1 - quer zur Förderrichtung F biegeelastisch ausgebildet. Die Übergangsgeländer 12 sind an ihren Übergangsstellen 10 und 11 jeweils starr mit dem Zulaufgeländer 3 und Ablaufgeländer 4 verbunden. Diese Ausführung gewährleistet einen knickfreien, tangentialen Übergang der Geländer im Erweiterungsbereich 9, selbst wenn die zur Anpassung an verschiedene Gefäßformate quer zur Förderrichtung F mittels einstellbarer Halterungen 19 am Gehäuse 20 des Förderbandes 16 befestigten Zulaufgeländer 3 und Ablaufgeländer 4 neu positioniert werden.

Die Zulaufgeländer 3 bzw. Übergangsgeländer 12 weisen im Verstellbereich des stromaufwärtigen Endes 7 der Schaltweiche 1 Vertiefungen (23) auf, die entsprechend an die Kontur des stromaufwärtigen Endes 7 der Schaltweiche 1 angepaßt sind, damit das Zulaufgeländer 3 und die Schaltweiche 1 eine bündige, kantenfreie Übergangskontur bilden können. Diese Vertiefungen oder Aussparungen dienen zugleich als Endanschläge für die Schaltweiche 1. Die Vertiefungen sind in die Kunststoffummantelung der einen Metallkern aufweisenden Geländer eingeformt.

Wie in Fig. 2 erkennbar ist, steht die durch eine nicht dargestellte Steuereinrichtung ansteuerbare Betätigungseinrichtung 13, z.B. Pneumatikzylinder, mit einem Schiebestück 18 in Verbindung, welches quer zur Förderrichtung F verschiebbar auf einem mit Abstand oberhalb parallel zur Förderebene angeordneten Führungselement 14 geführt ist. Das Schiebestück 18 dient zugleich als Halterung des stromaufwärtigen Endes 7 der Schaltweiche 1. Zum Längenausgleich beim Schaltvorgang wird das stromaufwärtige Ende 7 quer zur Führungsachse des Führungselements 14 beweglich durch das Schiebestück 18 gehalten.

Zur Ausscheidung von Scherben oder teilweise gebrochenen Flaschen ist das Trenngeländer 2 (siehe Fig. 1) in etwa mittig zum Förderband 16 angeordnet, wobei die parallel verlaufenden Ablaufgeländer 4 seitlich mit Abstand zu den äußeren Rändern des Förderbandes 16 angeordnet sind. Bedingt durch den dadurch entstehenden Spalt werden die Gefäße 15 nur teilweise bzw. halbseitig an ihrer Bodenfläche unterstützt gehalten. Scherben oder auf halber Höhe abgebrochene Flaschen können dann aufgrund der fehlenden Abstützung durch das Ablaufgeländer 4 durch den freien Spalt nach unten ausgeschieden werden.

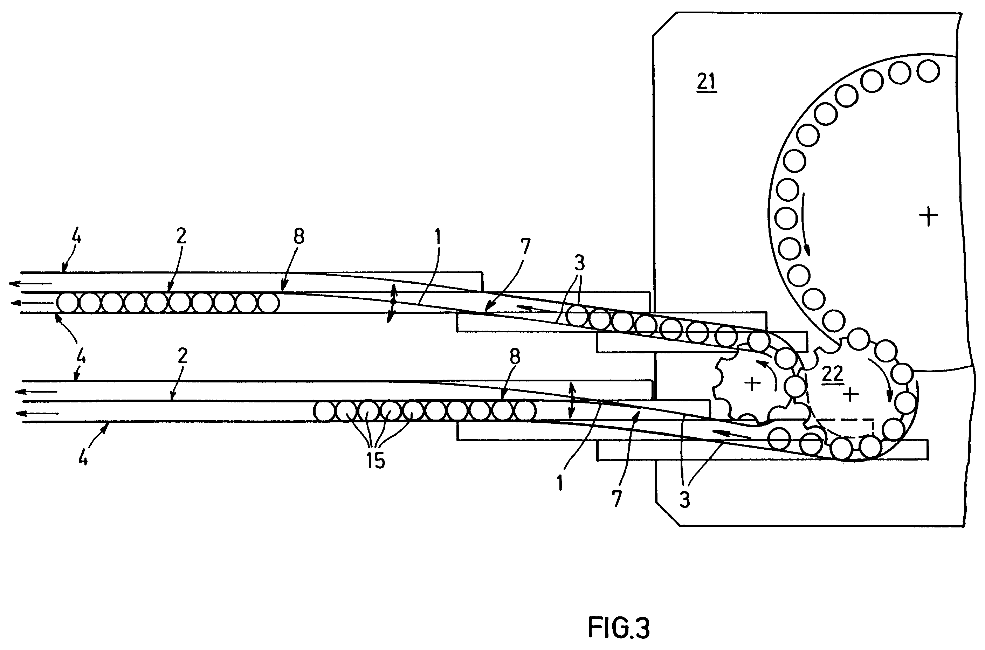

Fig. 3 zeigt ein zweites Ausführungsbeispiel mit zwei parallel zueinander angeordneten Schaltweichen 1. Die einspurig aus einer Gefäßbehandlungsmaschine 21, z.B. Etikettiermaschine, auslaufenden Gefäße können mit Hilfe eines mit ansteuerbaren Halteeinrichtungen, z.B. Klammern, Drehriegel oder Vakuumeinrichtungen, ausgestatteten Auslaufsterns 22 wahlweise einer der beiden parallel zueinander angeordneten Schaltweichen 1 zugeführt werden. Es können beispielsweise abwechselnd Gefäßpulks den beiden Schaltweichen zugeleitet werden, wodurch auf den beiden einspurigen, zu den Schaltweichen 1 führenden Förderspuren einspurige Gefäßpulks, z.B. bestehend aus zehn oder mehr Gefäßen, mit dazwischenliegenden, in etwa gleich langen Lücken entstehen. Diese Lücken können zum Umschalten der Schaltweichen 1 genützt werden, sobald das letzte Gefäß eines Pulks das stromabwärtige Ende 8 einer Schaltweiche 1 erreicht hat, d.h. sich zwischen dem Trenngeländer 2 und einem Ablaufgeländer 4 befindet.

## Patentansprüche

1. Vorrichtung zum Überleiten eines in einer Reihe einspurig zulaufenden Gefäßstromes auf mehrere, vorzugsweise zwei, abführende Förderspuren (5, 6) mit Hilfe einer Schaltweiche (1), die als Leitfläche dient und deren stromaufwärtiges, zum einspurig zulaufenden Gefäßstrom weisendes Ende (7) im wesentlichen quer zur Förderrichtung (F) verstellbar ist, dadurch gekennzeichnet, daß die Schaltweiche (1) zumindest abschnittsweise biegeelastisch ausgebildet ist und ihr stromabwärts weisendes Ende (8) quer zur Förderrichtung (F) unverrückbar gehalten oder geführt wird.

2. Vorrichtung nach Anspruch 1, dadurch gekennzeichnet, daß sich an das stromabwärts weisende Ende (8) der Schaltweiche (1) ein den abführenden Förderspuren (5, 6) zugeordnetes Trenngeländer (2) anschließt.

3. Vorrichtung nach wenigstens einem der vorhergehenden Ansprüche, dadurch gekennzeichnet, daß der einspurig zulaufende Gefäßstrom durch zwei mit Abstand zueinander parallel verlaufende Zulaufgeländer (3) im Bereich vor der Schaltweiche (1) seitlich geführt wird.

4. Vorrichtung nach wenigstens einem der vorhergehenden Ansprüche, dadurch gekennzeichnet, daß im mehrspurigen Förderbereich (5, 6) mit Abstand parallel zum Trenngeländer (2) verlaufende Ablaufgeländer (4) angeordnet sind.

5. Vorrichtung nach wenigstens einem der vorhergehenden Ansprüche, dadurch gekennzeichnet, daß die Zulaufgeländer (3) nahe der Schaltweiche (1) in die Ablaufgeländer (4) des mehrspurigen Förderbereiches (5, 6) unter Ausbildung eines Erweiterungsbereiches (9), insbesondere S-förmig, übergehen.

6. Vorrichtung nach wenigstens einem der vorhergehenden Ansprüche, dadurch gekennzeichnet, daß die Zulaufgeländer (3) im Schwenkbereich der Schaltweiche (1) Vertiefungen oder Aussparungen (23) zur Aufnahme des stromaufwärtigen Endes (7) der Schaltweiche (1) aufweisen.

7. Vorrichtung nach wenigstens einem der vorhergehenden Ansprüche, dadurch gekennzeichnet, daß die Schaltweiche (1) zumindest an ihren beiden Enden (7, 8) biegeelastisch ausgebildet ist und ihre Kontur an den Übergangsstellen (10, 11) tangential in die Oberfläche der Zulaufgeländer (3) und des Trenngeländers (2) übergeht.

8. Vorrichtung nach wenigstens einem der vorhergehenden Ansprüche, dadurch gekennzeichnet, daß die im Erweiterungsbereich (9) die Zulaufgeländer (3) mit den Ablaufgeländern (4) verbindenden Übergangsgeländer (12) biegeelastisch ausgebildet sind.

9. Vorrichtung nach Anspruch 8, dadurch gekennzeichnet, daß im Erweiterungsbereich (9) der Abstand zwischen der gefäßführenden Kontur der Schaltweiche (1) und den außenliegenden Übergangsgeländern (12) in Förderrichtung (F) konstant ist.

10. Vorrichtung nach wenigstens einem der vorhergehenden Ansprüche, dadurch gekennzeichnet, daß die Schaltweiche (1) über ihre gesamte Länge biegeelastisch, insbesondere nach Art einer einseitig eingespannten Blattfeder, ausgebildet ist.

11. Vorrichtung nach wenigstens einem der vorhergehenden Ansprüche, dadurch gekennzeichnet, daß die Schaltweiche (1) einstückig mit dem Trenngeländer (2) ausgebildet ist.

12. Vorrichtung nach wenigstens einem der vorhergehenden Ansprüche, dadurch gekennzeichnet, daß dem stromaufwärtigen Ende (7) der Schaltweiche (1) eine steuerbare Betätigungseinrichtung (13) zugeordnet ist.

13. Vorrichtung nach wenigstens einem der vorhergehenden Ansprüche, dadurch gekennzeichnet, daß das stromaufwärtige Ende (7) der Schaltweiche (1) mit einem quer zur Förderrichtung (F) bewegbaren Führungselement (14) verbunden ist.

14. Vorrichtung nach wenigstens einem der vorhergehenden Ansprüche, dadurch gekennzeichnet, daß die Schaltweiche (1) am Führungselement (14) im wesentlichen quer zur Führungsachse des Führungselements (14) bewegbar gehalten wird.

15. Vorrichtung nach wenigstens einem der vorhergehenden Ansprüche, dadurch gekennzeichnet, daß die Betätigungseinrichtung (13) und das Führungselement (14) mit Abstand oberhalb der Förderebene angeordnet sind, wobei die Führungsachse des Führungselements (14) parallel zur Förderebene verläuft.

16. Vorrichtung nach wenigstens einem der vorhergehenden Ansprüche, dadurch gekennzeichnet, daß die Zulaufgeländer (3) und Ablaufgeländer (4) zur Anpassung an unterschiedliche Gefäßformate quer zur Förderrichtung (F) einstellbar befestigt sind.

17. Vorrichtung nach wenigstens einem der vorhergehenden Ansprüche, dadurch gekennzeichnet, daß die Gefäße (15) mit Zwischenabstand oder pulkweise der Schaltweiche (1) zugeführt werden.

18. Vorrichtung nach wenigstens einem der vorhergehenden Ansprüche, dadurch gekennzeichnet, daß mehrere Schaltweichen (1) parallel zueinander angeordnet sind.

19. Vorrichtung nach wenigstens einem der vorhergehenden Ansprüche, dadurch gekennzeichnet, daß eine lückenlos einspurig zulaufende Gefäßreihe pulkweise auf mindestens zwei Förderspuren aufgeteilt wird, wobei jede der beiden Förderspuren zu mindestens einer Schaltweiche (1) führt.

20. Vorrichtung nach wenigstens einem der vorhergehenden Ansprüche, dadurch gekennzeichnet, daß die Gefäße aufrechtstehend auf einem oder mehreren Förderbändern transportiert werden und zur Ausscheidung von Scherben oder umgefallenen Gefäßen entlang der Zulaufgeländer (3) und/oder Ablaufgeländer (4) nur teilweise oder halbseitig an ihrer Bodenfläche durch ein Förderband unterstützt gehalten werden.

21. Vorrichtung nach wenigstens einem der vorhergehenden Ansprüche, dadurch gekennzeichnet, daß im Erweiterungsbereich (9) die Zulauf- (3), Übergangs- (12) und Ablaufgeländer (4) nahtlos, ohne Kanten oder Knickstellen, ineinander übergehen und vorzugsweise einstückig ausgebildet sind.

22. Vorrichtung nach wenigstens einem der vorhergehenden Ansprüche, dadurch gekennzeichnet, daß die Kontur der Schaltweiche (1) in beiden Schaltstellungen im wesentlichen kongruent zur Kontur des im Erweiterungsbereich (9) jeweils gegenüberliegenden Übergangsgeländers (12) ausgebildet ist.

## Claims

1. Device for transferring an incoming stream of containers in single file to a plurality of discharge conveyor tracks (5, 6), preferably two, with the aid of a switched point (1) which serves as a deflecting surface and the end (7) of which pointing upstream to the incoming stream of containers in single file is adjustable essentially transversely to the transport direction (F), characterised in that the switched point (1) is constructed in elastically bending manner at least in sections and its end (8) pointing downstream is held or guided in immovable manner transversely to the transport direction (F).

2. Device according to claim 1, characterised in that a partitioning rail (2) associated with the discharge conveyor tracks (5, 6) adjoins the switched point (1) at the end (8) pointing downstream.

3. Device according to at least one of the preceding claims, characterised in that the incoming stream of containers in single file is guided laterally by two inflow rails (3) extending at a distance parallel to one another in the region ahead of the switched point (1).

4. Device according to at least one of the preceding claims, characterised in that in the multiple-track conveyor region (5, 6), outflow rails (4) extending at a distance parallel to the partitioning rail (2) are arranged.

5. Device according to at least one of the preceding claims, characterised in that close to the switched point (1) the inflow rails (3) pass over, in particular in S-shaped manner, into the outflow rails (4) of the multiple-track conveyor region (5, 6) with formation of an expansion region (9).

6. Device according to at least one of the preceding claims, characterised in that in the pivot region of the switched point (1) the inflow rails (3) comprise depressions or recesses (23) for receiving the upstream end (7) of the switched point (1).

7. Device according to at least one of the preceding claims, characterised in that the switched point (1) is constructed in elastically bending manner at least at its two ends (7,8) and its contour at the transition locations (10, 11) passes over tangentially into the surface of the inflow rails (3) and of the partitioning rail (2).

8. Device according to at least one of the preceding claims, characterised in that the transition rails (12) connecting the inflow rails (3) to the outflow rails (4) in the expansion region (9) are constructed in elastically bending manner.

9. Device according to claim 8, characterised in that in the expansion region (9) the distance between the contour of the switched point (1) guiding the containers and the outwardly located transition rails (12) is constant in the transport direction (F).

10. Device according to at least one of the preceding claims, characterised in that over its entire length the switched point (1) is constructed in elastically bending manner, in particular in the fashion of a leaf spring clamped at one end.

11. Device according to at least one of the preceding claims, characterised in that the switched point (1) is constructed in one piece with the partitioning rail (2).

12. Device according to at least one of the preceding claims, characterised in that a controllable actuating device (13) is associated with the upstream end (7) of the switched point (1).

13. Device according to at least one of the preceding claims, characterised in that the upstream end (7) of the switched point (1) is connected to a guidance element (14) movable transversely to the transport direction (F).

14. Device according to at least one of the preceding claims, characterised in that the switched point (1) is held movably at the guidance element (14) essentially transversely to the guide axis of the guidance element (14).

15. Device according to at least one of the preceding claims, characterised in that the actuating device (13) and the guidance element (14) are arranged at a distance above the transport plane, wherein the guide axis of the guidance element (14) extends parallel to the transport plane.

16. Device according to at least one of the preceding claims, characterised in that the inflow rails (3) and outflow rails (4) are fixed in adjustable manner transversely to the transport direction (F) for adapting to different container shapes.

17. Device according to at least one of the preceding claims, characterised in that the containers (15) are fed to the switched point (1) with spacing between them or in groups.

18. Device according to at least one of the preceding claims, characterised in that several switched points (1) are arranged parallel to one another.

19. Device according to at least one of the preceding claims, characterised in that an uninterrupted incoming row of containers in single file is distributed in groups to at least two transport tracks, wherein each of the two transport tracks leads to at least one switched point (1).

20. Device according to at least one of the preceding claims, characterised in that the containers are transported standing upright on one or several conveyor belts and are held with only partial or semilateral support at their base surface by a conveyor belt for separating out fragments or toppled containers along the inflow rails (3) and/or outflow rails (4).

21. Device according to at least one of the preceding claims, characterised in that in the expansion region (9) the inflow (3), transition (12) and outflow rails (4) pass over into one another in seamless manner without edges or sharp bends and are preferably constructed in one piece.

22. Device according to at least one of the preceding claims, characterised in that the contour of the switched point (1) in both switching positions is constructed essentially congruent to the contour of the respective opposite transition rail (12) in the expansion region (9).

## Revendications

1. Dispositif de transfert sur plusieurs, de préférence deux, voies d'évacuation (5, 6) d'un courant de récipients arrivant en file sur une seule voie, à l'aide d'une aiguille (1) qui sert de surface directrice et dont l'extrémité amont (7), dirigée vers le courant de récipients arrivant sur une seule voie, est mobile sensiblement perpendiculairement à la direction de transport (F), caractérisé en ce que l'aiguille (1) est flexible au moins par endroits et son extrémité dirigée vers l'aval (8) est tenue ou guidée fixe perpendiculairement à la direction de transport (F).

2. Dispositif selon la revendication 1, caractérisé en ce qu'à l'extrémité dirigée vers l'aval (8) de l'aiguille (1) se joint une glissière séparatrice (2) associée aux voies d'évacuation (5, 6).

3. Dispositif selon au moins une des revendications précédentes, caractérisé en ce que le courant de récipients arrivant sur une seule voie est guidé latéralement dans la zone précédant l'aiguille (1) par deux glissières d'arrivée (3) s'étendant parallèlement à une certaine distance l'une de l'autre.

4. Dispositif selon au moins une des revendications précédentes, caractérisé en ce que dans la zone de transport à plusieurs voies (5, 6) sont placées des glissières de départ (4) s'étendant parallèlement à la glissière séparatrice (2) à une certaine distance de celle-ci.

5. Dispositif selon au moins une des revendications précédentes, caractérisé en ce que les glissières d'arrivée (3) se raccordent près de l'aiguille (1) aux glissières de départ (4) de la zone de transport à plusieurs voies (5, 6) en formant un zone d'élargissement (9), en particulier en forme de S.

6. Dispositif selon au moins une des revendications précédentes, caractérisé en ce que les glissières d'arrivée (3) présentent dans la zone de rotation de l'aiguille (1) des creux ou évidements (23) destinés à recevoir l'extrémité amont (7) de l'aiguille (1).

7. Dispositif selon au moins une des revendications précédentes, caractérisé en ce que l'aiguille (1) est flexible au moins à ses deux extrémités (7, 8) et son contour aux endroits de raccordement (10, 11) se raccorde tangentiellement à la surface des glissières d'arrivée (3) et de la glissière séparatrice (2).

8. Dispositif selon au moins une des revendications précédentes, caractérisé en ce que les glissières de raccordement (12) reliant dans la zone d'élargissement (9) les glissières d'arrivée (3) aux glissières de départ (4) sont flexibles.

9. Dispositif selon la revendication 8, caractérisé en ce que dans la zone d'élargissement (9), la distance entre le contour guidant les récipients de l'aiguille (1) et les glissières de raccordement situées à l'extérieur (12) est constante dans la direction de transport (F).

10. Dispositif selon au moins une des revendications précédentes, caractérisé en ce que l'aiguille (1) est flexible sur toute sa longueur, en particulier à la manière d'un ressort-lame encastré d'un côté.

11. Dispositif selon au moins une des revendications précédentes, caractérisé en ce que l'aiguille (1) fait corps avec la glissière séparatrice (2).

12. Dispositif selon au moins une des revendications précédentes, caractérisé en ce qu'à l'extrémité amont (7) de l'aiguille (1) est associé un dispositif de manoeuvre pouvant être commandé (13).

13. Dispositif selon au moins une des revendications précédentes, caractérisé en ce que l'extrémité amont (7) de l'aiguille (1) est liée à un élément de guidage (14) mobile perpendiculairement à la direction de transport (F).

14. Dispositif selon au moins une des revendications précédentes, caractérisé en ce que l'aiguille (1) est montée mobile sur l'élément de guidage (14) sensiblement perpendiculairement à l'axe de guidage de celui-ci.

15. Dispositif selon au moins une des revendications précédentes, caractérisé en ce que le dispositif de manoeuvre (13) et l'élément de guidage (14) sont placés une certaine distance au-dessus du plan de transport, l'axe de guidage de l'élément de guidage (14) étant parallèle au plan de transport.

16. Dispositif selon au moins une des revendications précédentes, caractérisé en ce que les glissières d'arrivée (3) et les glissières de départ (4) sont fixées de manière réglable perpendiculairement à la direction de transport (F) pour l'adaptation à différents formats de récipients.

17. Dispositif selon au moins une des revendications précédentes, caractérisé en ce que les récipients (15) sont amenés à l'aiguille (1) avec un intervalle entre eux ou par colonnes.

18. Dispositif selon au moins une des revendications précédentes, caractérisé en ce que plusieurs aiguilles (1) sont disposées parallèlement les unes aux autres.

19. Dispositif selon au moins une des revendications précédentes, caractérisé en ce qu'une file de récipients arrivant sans vides sur une seule voie est partagée en colonnes sur au moins deux voies de transport, chacune des deux voies de transport menant à au moins une aiguille (1).

20. Dispositif selon au moins une des revendications précédentes, caractérisé en ce que les récipients sont transportés debout sur une ou plusieurs bandes transporteuses et, pour le retrait des tessons ou des récipients tombés, sont tenus le long des glissières d'arrivée (3) et/ou des glissières de départ (4) en étant supportés par une bande transporteuse seulement sur une partie ou un côté de leur fond.

21. Dispositif selon au moins une des revendications précédentes, caractérisé en ce que dans la zone d'élargissement (9), les glissières d'arrivée (3), les glissières de raccordement (12) et les glissières de départ (4) se raccordent sans joint et sans arêtes ou coudes et sont de préférence d'un seul tenant.

22. Dispositif selon au moins une des revendications précédentes, caractérisé en ce que le contour de l'aiguille (1) dans les deux positions de celle-ci est sensiblement congruent au contour de la glissière de raccordement (12) située en face dans la zone d'élargissement (9).
